# EUROPÄISCHE PATENTANMELDUNG

(11) **EP 1 901 193 A2**
(43) Veröffentlichungstag der Anmeldung: **19.03.2008**
(21) Anmeldenummer: 06025142.8
(22) Anmeldetag: 05.12.2006
(51) Int. Cl.: G06F 21/02

(54) **Datenträger zum Speichern von zugriffsgeschützten Daten**

(30) Priorität: 15.09.2006 EP 06019354
(71) Anmelder: Nokia Siemens Networks GmbH & Co. KG, 81541 München (DE)
(72) Erfinder: Abendroth, Jörg, 81737 München (DE); Jerichow, Anja, Dr., 81735 München (DE)

(57) **Zusammenfassung**

Datenträger zum Speichern von zugriffsgeschützten Daten, wobei auf dem Datenträger ferner verschlüsselte ausführbare Zugriffskontrollprogramme abgespeichert sind, die jeweils von einem Gerät mit einem Sicherheitsmodul aufrufbar sind, das über einen zu dem jeweiligen Zugriffskontrollprogramm zugehörigen Schlüssel verfügt, wobei ein aufgerufenes Zugriffskontrollprogramm den Zugriff auf die zugriffgeschützten Daten in Abhängigkeit von Zugriffsregeln steuert, die in einer Konfigurationsdatei des Datenträgers gespeichert sind.

## Beschreibung

Die Erfindung betrifft einen Datenträger zum Speichern von zugriffsgeschützten Daten, ein Zugriffskontrollprogramm zur Kontrolle des Datenzugriffs auf die zugriffsgeschützten Daten eines Datenträgers sowie ein Gerät mit einem Sicherheitsmodul, das einen Schlüssel zur Aktivierung eines derartigen Zugriffskontrollprogramms aufweist.

Nutzer möchten in vielen Fällen Daten, die auf Datenträgern gespeichert sind, mit anderen Nutzern teilen bzw. an diese weitergeben. Typische Datenträger sind CDs, Disketten, SD-Karten, Smart Cards, USB-Speichersticks und dergleichen. Ein Nutzer hat beispielsweise eine Sammlung von Urlaubsbildern einschließlich Metadaten zur Beschreibung der Urlaubsbilder auf einem USB-Speicherstick abgelegt. Die Metadaten umfassen einerseits öffentliche Informationen und andererseits auch private Informationen. Beispielsweise geben die Metadaten den Zeitpunkt an, an dem das Bild gemacht wurde, die Identitäten der auf den Bildern abgebildeten Personen oder auch GPS-Koordinaten des Ortes, an dem das Foto aufgenommen wurde. Im Medizinbereich können derartige Fotos auch biomedizinische Informationsdaten über den Gesundheitszustand der auf dem Bild aufgenommenen Personen angeben. Einige dieser Metadaten können an Bekannte weitergegeben werden, wohingegen in anderen Fällen die Metadaten beispielsweise nur einem Doktor zur Verfügung gestellt werden sollen. Der Personenkreis, der Zugriff auf die Metadaten hat, kann sukzessiv eingeschränkt werden. Beispielsweise kann der Lebenspartner des Nutzers auf alle Metadaten Zugriff haben. Ein auf der Reise mitreisender Freund erhält Zugriffsrechte auf Metadaten, die die auf dem Urlaub aufgenommenen Foto betreffen, jedoch nicht auf medizinische Informationsdaten, die ebenfalls auf dem Datenträger bzw. auf der Datenkarte gespeichert sind. Schließlich können die medizinischen Informationsdaten bei einem Anwendungsbeispiel nur Doktoren zugänglich gemacht werden, welche gerade als Notärzte tätig sind. In einem weiteren Anwendungsfall können bestimmte Informationen über die Reise einer Reiseagentur zugänglich gemacht, beispielsweise wie viele Kilometer man gereist ist und mit vielen Personen die Reise stattgefunden hat. Es ist dabei möglich, Zugriffsregeln bzw. eine Policy zu formulieren, sodass einige Fragen der Reiseagentur beantwortet werden und andere Informationen nicht preisgegeben werden.

Die Implementierung einer Zugriffs-Policy bzw. von Zugriffsregeln auf einem Datenträger macht es jedoch bei einem herkömmlichen Datenträger erforderlich, eine Datenverarbeitungseinheit bzw. CPU auf dem Datenträger zu integrieren, auf dem ein Datenverarbeitungsprotokoll ablaufen kann.

Eine weitere herkömmliche Möglichkeit, einen selektiven Zugang zu Daten, insbesondere zu Metadaten, auf einem Datenträger zu ermöglichen, besteht darin, die jeweiligen Daten jeweils getrennt zu verschlüsseln und den jeweils relevanten Personen entsprechende Entschlüsselungsschlüssel verfügbar zu machen. Dies ist allerdings relativ umständlich und hat den zusätzlichen Nachteil, dass zur Änderung der Sicherheitsregeln bzw. der Policy die Daten zumindest teilweise entschlüsselt und anschließend zurückverschlüsselt werden müssen.

Ein weiteres bekanntes System nach dem Stand der Technik stellt ein OMA Digital Rights Management-System dar, bei dem auf geschützte Inhaltsdaten nur ein Nutzer Zugriff erhält, der über entsprechende Rechteobjekte RO verfügt.

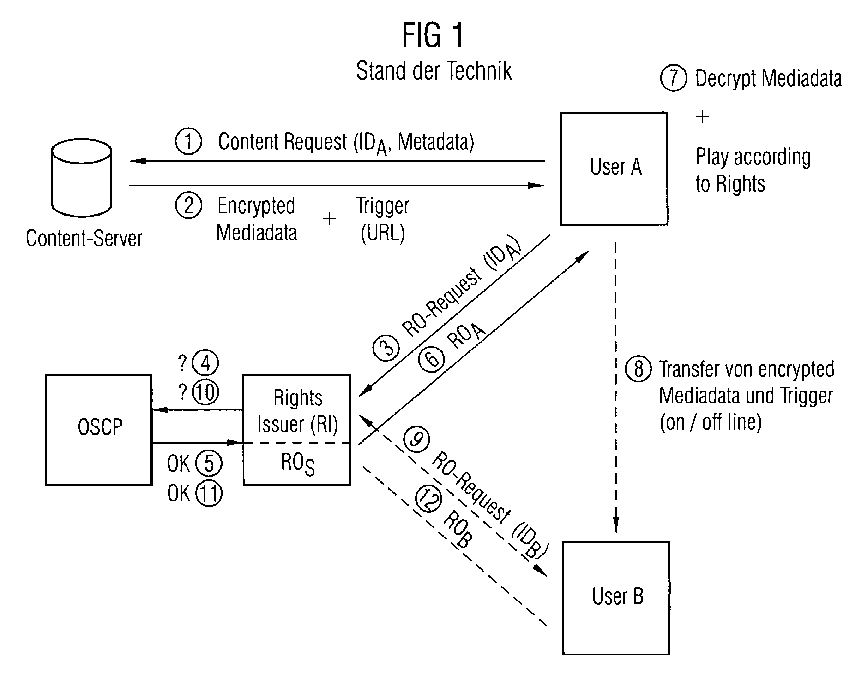

Figur 1 zeigt wie mittels eines herkömmlichen DRM-Managementverfahrens zwei Nutzer, nämlich User A und User B, Mediendaten austauschen können. Ein erster Nutzer A sendet zunächst eine Anfrage nach Mediendaten an einen Content-Server, in dem die Mediendaten abgelegt sind. Die Anfrage des ersten Nutzers A enthält eine Nutzeridentifizierung ID sowie Metadaten zu den angefragten Mediendaten. Die Metadaten beschreiben die nachgefragten Nutzdaten bzw. Mediendaten und fragen beispielsweise Musik der Popgruppe "Abba" nach. Die Musikdatenbank bzw. der Content-Server übertragen anschließend die nachgefragten Mediendaten bzw. die nachgefragten Musikdaten in verschlüsselter Form zusammen mit einem so genannten Trigger, d. h. einer Adresse bzw. einem Vektor, beispielsweise einer URL-Adresse an den Nutzer A. Der Nutzer A sendet anschließend eine Anfrage zum Empfang eines so genannten Rechteobjekts RO mit seiner Nutzeridentifizierung ID_{A} an die in dem Trigger angegebene Adresse, welche die Adresse eines Rechteherausgebers bzw. Rights Issuer RI darstellt. Dieser Rechteherausgeber RI fragt bei einem vertrauenswürdigen Online Status Certificate Provider USCP nach, ob die Anfrage nach dem Rechteobjekt RO zulässig ist. Ist der nachfragende Benutzer zugelassen, meldet dies der Online Status Certificate Provider OSCP an den Rechteherausgeber RI und dieser sendet das angefragte Rechteobjekt RO an den Nutzer A. Mit dem erhaltenen Rechteobjekt RO_{A} ist der Nutzer A in der Lage, die von dem Content-Server erhaltenen verschlüsselten Nutzdaten zu entschlüsseln und die Mediendaten bzw. Musikdaten entsprechend den im Rechteobjekt gegebenen Nutzrechten abzuspielen (play according to rights). Beispielsweise erhält der Nutzer A das Recht, ein Objekt n-mal anzuhören oder bis zum Ablauf des Jahres, beispielsweise bis zum 31.12.2006, anzuhören.

Möchte der Nutzer A die von ihm heruntergeladene verschlüsselte Musik mit einem weiteren Nutzer teilen bzw. zur Verfügung stellen, beispielsweise einem Freund auf einer Party, kann er die verschlüsselten Mediendaten und den Trigger bzw. die Vektoradresse zusammen drahtgebunden oder drahtlos übertragen. Beispielsweise wird die verschlüsselte Datei von einem Mobiltelefon des Nutzers A per Bluetooth an ein Mobiltelefon des Nutzers B übertragen. Der Nutzer B erhält die verschlüsselte Datei zusammen mit dem entsprechenden Trigger und richtet seinerseits eine Anforderung nach einem Rechteobjekt RO mit seiner Identität ID_{B} an den Rechteherausgeber RI. Dieser weist dem Nutzer B nach entsprechender Anfrage bei dem Online Status Certificate Provider ein entsprechendes Rechteobjekt RO_{B} zu, mit dessen Hilfe anschließend die Entschlüsselung der übertragenen Mediendatei erfolgt. Wie man aus Figur 1 erkennen kann, ist die dort dargestellte Vorgehensweise recht umständlich und wenig flexibel.

Es ist daher die Aufgabe der vorliegenden Erfindung, einen Datenträger zum Speichern von zugriffsgeschützten Daten und ein Zugriffskontrollprogramm zur Kontrolle eines Datenzugriffs auf zugriffsgeschützten Daten eines Datenträgers zu schaffen, die es einem Nutzer erlauben, die zugriffsgeschützten Daten in einfacher Weise an einen weiteren Nutzer selektiv weiterzugeben.

Diese Aufgabe wird erfindungsgemäß durch einen Datenträger mit den im Patentanspruch 1 angegebenen Merkmalen gelöst.

Die Erfindung schafft einen Datenträger zum Speichern von zugriffsgeschützten Daten, wobei auf dem Datenträger ferner verschlüsselte ausführbare Zugriffskontrollprogramme abgespeichert sind, die jeweils von einem Gerät mit einem Sicherheitsmodul aufrufbar sind, das über einen zu dem jeweiligen Zugriffskontrollprogramm zugehörigen Schlüssel verfügt, wobei ein aufgerufenes Zugriffskontrollprogramm den Zugriff auf die zugriffsgeschützten Daten in Abhängigkeit von Zugriffsregeln steuert, die in einer Konfigurationsdatei des Datenträgers gespeichert sind.

Bei den zugriffsgeschützten Daten handelt es sich vorzugsweise um Mediendaten.

Bei einer alternativen Ausführungsform handelt es sich bei den zugriffsgeschützten Daten um persönliche Daten eines Nutzers.

Bei dem Sicherheitsmodul handelt es sich vorzugsweise um ein TPM (Trusted Platform Module)-Modul eines Gerätes.

Dabei ist der erfindungsgemäße Datenträger vorzugsweise in das Gerät einsetzbar.

Das Sicherheitsmodul weist vorzugsweise einen gerätespezifischen Schlüssel zum Entschlüsseln eines auf dem Datenträger gespeicherten Zugriffskontrollprogramms auf.

Dabei sind die zugriffsgeschützten Daten vorzugsweise in einem zugriffsgeschützten Speicherbereich des Datenträgers abgespeichert.

Die zugriffsgeschützten Daten sind vorzugsweise mit einem Datenverschlüsselungsschlüssel verschlüsselt auf dem Datenträger gespeichert.

Bei einer Ausführungsform des erfindungsgemäßen Datenträgers weist die Konfigurationsdatei Rechteobjekte für die zugriffsgeschützten Daten auf.

Bei einer Ausführungsform des erfindungsgemäßen Datenträgers ist der Datenverschlüsselungsschlüssel in der Konfigurationsdatei geschützt gespeichert.

Bei einer Ausführungsform des erfindungsgemäßen Datenträgers sind die zugriffsgeschützten Daten als eine Vielzahl von Dateien abgespeichert, wobei für jede Datei eine zugehörige Konfigurationsdatei vorgesehen ist.

Bei einer Ausführungsform des erfindungsgemäßen Datenträgers weist jede Konfigurationsdatei mehrere Dateizugriffsregeln für die Nutzung der in der Datei abgespeicherten Daten auf.

Bei einer Ausführungsform des erfindungsgemäßen Datenträgers ist das Zugriffskontrollprogramm durch einen DRM-Agenten ausführbar.

Bei einer Ausführungsform des erfindungsgemäßen Datenträgers ist das Zugriffskontrollprogramm durch das Sicherheitsmodul eines Gerätes ausführbar.

Bei einer Ausführungsform des erfindungsgemäßen Datenträgers ist das Zugriffskontrollprogramm durch eine auf dem Datenträger integrierte Datenverarbeitungseinheit ausführbar.

Bei dem erfindungsgemäßen Datenträger handelt es sich vorzugsweise um eine Smart Card, eine MMC, eine SD, einen USB-Stick oder um eine DVD.

Die Erfindung schafft ferner ein Zugriffskontrollprogramm zur Kontrolle eines Datenzugriffs auf zugriffsgeschützte Daten eines Datenträgers, wobei das Zugriffskontrollprogramm durch ein Sicherheitsmodul eines Gerätes aktivierbar ist, das über einen zu dem Zugriffskontrollprogramm zugehörigen Schlüssel verfügt, wobei das aktivierte Zugriffskontrollprogramm den Zugriff auf die zugriffsgeschützten Daten in Abhängigkeit von Zugriffsregeln steuert, die in einer Konfigurationsdatei des Datenträgers gespeichert sind.

Die Erfindung schafft ferner ein Gerät mit einem Sicherheitsmodul, das einen Schlüssel zur Aktivierung eines Zugriffskontrollprogramms aufweist, das auf einem in das Gerät einsetzbaren Datenträger gespeichert ist, wobei das aktivierte Zugriffskontrollprogramm den Zugriff auf zugriffsgeschützte Daten des Datenträgers in Abhängigkeit von Zugriffsregeln steuert, die in einer Konfigurationsdatei des Datenträgers gespeichert sind.

Im Weiteren werden bevorzugte Ausführungsformen des erfindungsgemäßen Datenträgers und des erfindungsgemäßen Zugriffskontrollprogramms unter Bezugnahme auf die beigefügten Figuren zur Erläuterung erfindungswesentlicher Merkmale beschrieben.

Es zeigen:
- Figur 1: ein Diagramm zur Darstellung eines herkömmlichen DRM-Management-Systems nach dem Stand der Technik;
- Figur 2: eine schematische Darstellung einer möglichen Ausführungsform eines erfindungsgemäßen Datenträgers zum Speichern von zugriffsgeschützten Daten;
- Figur 3: ein Blockschaltbild einer möglichen Ausführungsform eines erfindungsgemäßen Gerätes mit einem Sicherheitsmodul;
- Figur 4: ein Signaldiagramm zur Darstellung der Funktionsweise einer möglichen Ausführungsform des erfindungsgemäßen Zugriffskontrollprogramms.

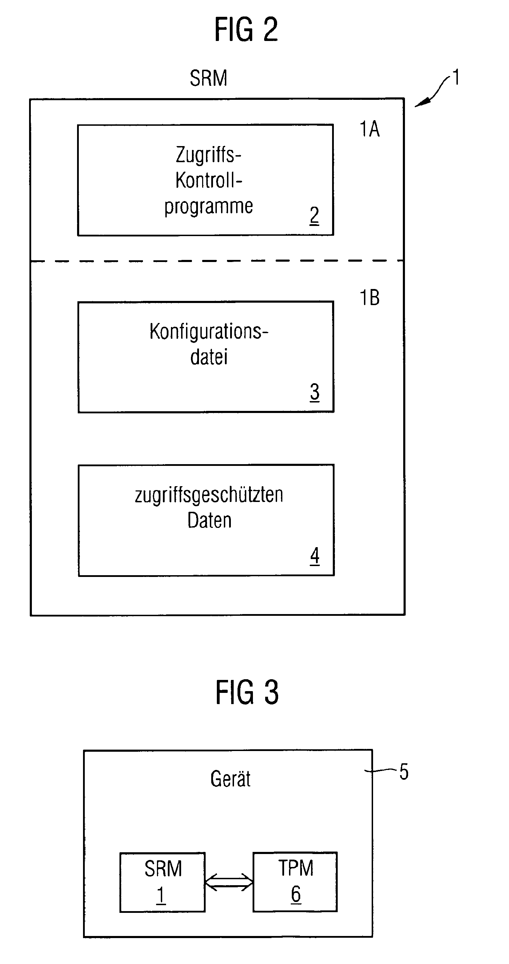

Wie man aus Figur 2 erkennen kann, weist der erfindungsgemäße Datenträger 1 bei einer möglichen Ausführungsform mehrere Speicherbereiche auf. Bei dem Datenträger 1 kann es sich um einen SRM (Secure Removable Media)-Datenträger handeln, beispielsweise eine MMC, eine Smart Card, eine SD oder um einen USB-Stick. Bei weiteren Ausführungsformen kann es sich bei dem Datenträger 1 auch um herkömmliche Datenträger wie CDs, Kassetten und dergleichen handeln. Der Datenträger 1 weist einen ersten Speicherbereich 1A zum Abspeichern von Zugriffskontrollprogrammen 2 auf.

Die Zugriffskontrollprogramme 2 sind vorzugsweise jeweils gerätespezifisch verschlüsselt, d. h. sie sind jeweils nur von einem Gerät mit einem bestimmten Sicherheitsmodul aufrufbar, das über einen zu dem jeweiligen Zugriffskontrollprogramm 2 zugehörigen Schlüssel verfügt. Bei einem derartigen Sicherheitsmodul kann es sich beispielsweise um ein TPM (Trusted Platform Module)-Modul eines beliebigen Endgerätes handeln, beispielsweise eines mobilen Telefons, eines Laptops oder eines Multimedia-Players.

Beispielsweise sind die Zugriffskontrollprogramme 2 auf dem Datenträger 1 eines Nutzers durch Geräte von Freunden des Nutzers aufrufbar, die jeweils mit einem zugehörigen Sicherheitsmodul ausgestattet sind. Das Zugriffskontrollprogramm 2 ist gewissermaßen mit dem TPM-Modul bzw. mit dessen gerätespezifischen Schlüssel versiegelt (sealed). Das Sicherheitsmodul des jeweiligen Endgerätes weist einen gerätespezifischen Schlüssel zum Entschlüsseln eines auf dem Datenträger 1 gespeicherten Zugriffskontrollprogramms 2 auf. Auf dem Datenträger 1 befinden sich mehrere Zugriffskontrollprogramme 2, die jeweils mit einem zugehörigen gerätespezifischen Schlüssel eines Gerätesicherheitsmoduls entschlüsselbar ist.

Neben den Zugriffskontrollprogrammen 2 sind auf dem Datenträger 1 in einem zweiten Speicherbereich 1B Konfigurationsdateien 3 und die zugriffsgeschützten Daten 4 abgelegt. Bei den zugriffsgeschützten Daten handelt es sich beispielsweise um verschlüsselte Mediendaten, insbesondere um verschlüsselte Audio- oder Videodaten. Die Konfigurationsdateien 3 weisen jeweils Rechteobjekte RO für die zugriffsgeschützten Daten 4 auf. Die Konfigurationsdateien 3 sind ihrerseits vorzugsweise verschlüsselt abgelegt. Vorzugsweise sind die zugriffsgeschützten Daten 4 als eine Vielzahl von Dateien in dem Speicherbereich 1B abgespeichert, wobei für jede Datei eine zugehörige Konfigurationsdatei 3 vorgesehen ist. Jede Konfigurationsdatei 3 weist dabei Zugriffsregeln für die Nutzung der in der zugehörigen Datei abgespeicherten zugriffsgeschützten Daten 4 auf. Derartige Zugriffsregeln bzw. Parameter bestehen in Nutzungsrechten, wie beispielsweise ein n-maliges Abspielen der Mediendatei, oder einem Zeitraum, in dem die Mediendatei abspielbar ist usw.

Ein aufgerufenes Zugriffskontrollprogramm 2, welches in dem ersten Speicherbereich 1A abgelegt ist, steuert den Zugriff auf die zugriffsgeschützten Daten bzw. Dateien 4 in Abhängigkeit von den Zugriffsregeln, die in der zugehörigen Konfigurationsdatei 3 im zweiten Speicherbereich 1B des Datenträgers 1 gespeichert sind.

Figur 3 zeigt ein einfaches Blockschaltbild bei einer möglichen Ausführungsform eines erfindungsgemäßen Gerätes 5, in welches der in Figur 2 dargestellte Datenträger 1 einsetzbar ist. Das Gerät 5, bei dem es sich beispielsweise um ein mobiles Telefongerät, einen MP3-Player oder um einen Laptop handeln kann, verfügt über ein Sicherheitsmodul 6. Das Sicherheitsmodul 6 ist beispielsweise ein TPM-Modul. Das Sicherheitsmodul 6 verfügt über einen Schlüssel zur Aktivierung eines auf dem Datenträger 1 abgespeicherten Zugriffskontrollprogramms 2. Das aktivierte Zugriffskontrollprogramm 2 steuert den Zugriff auf zugriffsgeschützte Daten 4, die in dem Speicherbereich 1B des Datenträgers 1 gespeichert sind, in Abhängigkeit von Zugriffsregeln, die in einer zugehörigen Konfigurationsdatei 3 des Datenträgers 1 abgelegt sind.

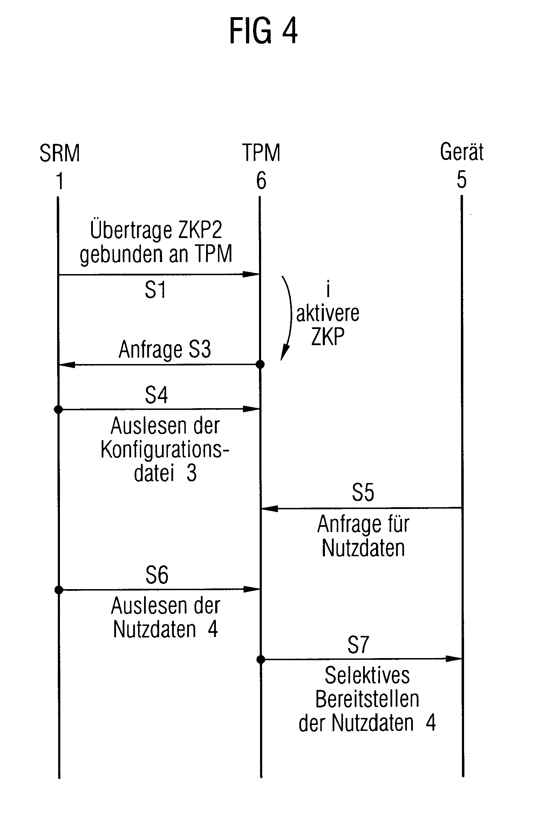

Figur 4 zeigt ein Signaldiagramm zur Darstellung eines Datenzugriffs einer möglichen Ausführungsform des erfindungsgemä-ßen Gerätes 5.

Aus dem in das Gerät 5 eingelegten Datenträger 1 wird das zu dem TPM-Modul 6 des Gerätes 5 zugehörige Zugriffskontrollprogramm 2 aus dem Speicherbereich 1A im Schritt S1 ausgelesen. Das TPM-Sicherheitsmodul 6, welches das Zugriffskontrollprogramm (ZKP) 2 aufruft und ausliest, verfügt über einen zu dem jeweiligen Zugriffskontrollprogramm 2 zugehörigen Schlüssel. Das Zugriffskontrollprogramm 2 wird mittels dieses gerätespezifischen Schlüssels im Schritt S2 aktiviert und erlaubt anschließend die Kontrolle des Datenzugriffs auf die weiteren zugriffsgeschützten Daten 4 des Datenträgers 1. Hierzu wird die zugehörige Konfigurationsdatei 3 aus dem Speicherbereich 1B des digitalen Datenträgers 1 auf Anfrage im Schritt S3 im Schritt S4 ausgelesen. In der ausgelesenen Konfigurationsdatei 3 befinden sich auch die Zugriffsregeln, welche den Datenzugriff auf die zugriffsgeschützten Daten 4 festlegen. Das Zugriffskontrollprogramm 2 liest auf Anfrage im Schritt S5 die Konfigurationsdatei 3 aus und versorgt im Schritt S7 das Gerät 5 nach Auslesen der Daten 4 im Schritt S6 aus dem Speicherbereich 1B mit den zugriffsgeschützten Daten 4, sofern die in der Konfigurationsdatei 3 abgelegten Zugriffsregeln diesen Datenzugriff erlauben. Lediglich mit Hilfe eines zugelassenen Endgerätes 5 ist es einem Nutzer möglich, bestimmte zugriffsgeschützte Daten aus dem Datenträger 1 auszulesen.

Anwendungsprogramme, die auf dem Gerät 5 laufen, haben dann ebenfalls Zugang zu den auf dem Datenträger 1 abgespeicherten zugriffsgeschützten Daten. Beispielsweise senden Anwendungsprogramme eine entsprechende Anforderung an das TPM-Modul 6, welches die angeforderten zugriffsgeschützten Daten, beispielsweise Bild- oder Musikdaten aus dem Speicherbereich 1B des Datenträgers 1 auslesen. Diese Daten 4 können dann dem auf dem Gerät 5 laufenden Anwendungsprogramm zur Verfügung gestellt. Bei dem erfindungsgemäßen Datenträger 1 werden die Daten und die zugehörigen Metadaten in einem Speicherbereich 1B verschlüsselt mit einem Schlüssel abgelegt. Ein Nutzer, der über diesen Schlüssel verfügt, kann die Daten bzw. Dateien 4 in diesem Speicherbereich 1B auf einfache Weise ändern. In dem Speicherbereich 1B befinden sich auch die zugehörigen Konfigurationsdateien 3, welche die Zugriffsrechte bzw. Nutzungsregeln zur Nutzung der zugriffsgeschützten Daten 4 beschreiben. In dem anderen Speicherbereich 1A des Datenträgers 1, der dort frei lesbar ist, d. h. nicht verschlüsselt ist, befinden sich die Zugriffskontrollprogramme 2. Die Zugriffskontrollprogramme 2 sind allerdings an bestimmte TPM-Sicherheitsmodule gebunden. Nur Geräte 5 mit dem entsprechenden TPM-Sicherheitsmodul 6 haben Zugriff auf das zugehörige Zugriffskontrollprogramm 2 in dem Speicherbereich 1A des Datenträgers 1.

Ein Nutzer kann den Datenträger 1 in ein Gerät 5 mit einem zugelassenen Sicherheitsmodul 6 einlegen und seine Daten zur Verfügung stellen, wobei allerdings aufgrund der in der Konfigurationsdatei 3 abgespeicherten Zugriffsregeln sichergestellt ist, dass die freigegebenen Daten entsprechend dem jeweiligen Nutzer des Endgerätes 5 selektiv zur Verfügung gestellt werden. Beispielsweise erhält ein Lebenspartner mit seinem Endgerät 5 Zugriff auf alle zugriffsgeschützten Daten 4, während ein entfernter Bekannter mit seinem Endgerät 5 lediglich Zugriff auf nicht-sensitive Daten erhält, beispielsweise auf Urlaubsbilder.

Die Zugangskontrollprogramme 2 erlauben einen differenzierten Zugriff auf die zugriffsgeschützten Daten, wobei die Zugriffsregeln konfigurierbar sind. Um Daten einem weiteren Nutzer zur Verfügung zu stellen, muss der erfindungsgemäße Datenträger 1 lediglich in dessen Endgerät 5 eingelegt werden, wobei sichergestellt ist, dass jeder Nutzer lediglich die für ihn bestimmten Daten herunterladen kann.

Der erfindungsgemäße Datenträger 1 benötigt keine integrierte Datenverarbeitungseinheit, um einen kontrollierten Datenaustausch zu gewährleisten.

Bei einer alternativen Ausführungsform des erfindungsgemäßen Datenträgers ist zusätzlich auf dem Datenträger eine Datenverarbeitungseinheit integriert, welche beispielsweise die Ausführung eines Zugriffkontrollprogramms 2 auf dem Datenträger 1 selbst erlaubt. Verfügt der Datenträger 1 selbst nicht über eine Datenverarbeitungseinheit, wird das Zugriffskontrollprogramm vorzugsweise in dem TPM-Sicherheitsmodul 6 des Endgerätes 5 ausgeführt.

## Patentansprüche

1. Datenträger (1) zum Speichern von zugriffsgeschützten Daten (4),
wobei auf dem Datenträger (1) ferner verschlüsselte ausführbare Zugriffskontrollprogramme (2) abgespeichert sind, die jeweils von einem Gerät (5) mit einem Sicherheitsmodul (6) aufrufbar sind, das über einen zu dem jeweiligen Zugriffskontrollprogramm (2) zugehörigen Schlüssel verfügt,
wobei ein aufgerufenes Zugriffskontrollprogramm (2) den Zugriff auf die zugriffgeschützten Daten (4) in Abhängigkeit von Zugriffsregeln steuert, die in einer Konfigurationsdatei (3) des Datenträgers (1) gespeichert sind.

2. Datenträger nach Anspruch 1,
wobei die zugriffsgeschützten Daten (4) Mediendaten sind.

3. Datenträger nach Anspruch 1,
wobei die zugriffsgeschützten Daten (4) persönliche Daten eines Nutzers sind.

4. Datenträger nach Anspruch 1,
wobei das Sicherheitsmodul (6) ein TPM (Trusted Platform Module)-Modul eines Gerätes (5) ist.

5. Datenträger nach Anspruch 1,
wobei der Datenträger (1) in das Gerät (5) einsetzbar ist.

6. Datenträger nach Anspruch 1,
wobei das Sicherheitsmodul (6) einen gerätespezifischen Schlüssel zum Entschlüsseln eines auf dem Datenträger (1) gespeicherten Zugriffskontrollprogramms (2) aufweist.

7. Datenträger nach Anspruch 1,
wobei die zugriffsgeschützten Daten (4) in einem zugriffsgeschützten Speicherbereich (1B) des Datenträgers (1) gespeichert sind.

8. Datenträger nach Anspruch 1,
wobei die zugriffsgeschützten Daten (4) mit einem Datenverschlüsselungsschlüssel verschlüsselt auf dem Datenträger (1) gespeichert sind.

9. Datenträger nach Anspruch 1,
wobei die Konfigurationsdatei (3) Rechteobjekte (RO) für die zugriffsgeschützten Daten (4) aufweist.

10. Datenträger nach Anspruch 8,
wobei der Datenverschlüsselungsschlüssel in der Konfigurationsdatei (3) geschützt abgespeichert ist.

11. Datenträger nach Anspruch 1,
wobei die zugriffsgeschützten Daten (4) als eine Vielzahl von Dateien abgespeichert sind, wobei für jede Datei eine zugehörige Konfigurationsdatei (3) vorgesehen ist.

12. Datenträger nach Anspruch 11,
wobei jede Konfigurationsdatei (3) einer Datei Zugriffsregeln für die Nutzung der in der Datei abgespeicherten Daten aufweist.

13. Datenträger nach Anspruch 1,
wobei das Zugriffskontrollprogramm (2) durch einen DRM-Agenten ausführbar ist.

14. Datenträger nach Anspruch 1,
wobei das Zugriffskontrollprogramm (2) durch das Sicherheitsmodul (6) eines Gerätes (5) ausführbar ist.

15. Datenträger nach Anspruch 1,
wobei das Zugriffskontrollprogramm (2) durch eine auf dem Datenträger (1) integrierte Datenverarbeitungseinheit ausführbar ist.

16. Datenträger nach Anspruch 1,
wobei der Datenträger (1) durch eine Smart Card, eine MMC, eine SD, einen USB-Stick oder durch eine DVD gebildet wird.

17. Zugriffskontrollprogramm zur Kontrolle eines Datenzugriffs auf zugriffsgeschützte Daten (4) eines Datenträgers (1),
wobei das Zugriffskontrollprogramm (2) durch ein Sicherheitsmodul (6) eines Gerätes (5) aktivierbar ist, das über einen zu dem Zugriffskontrollprogramm (2) zugehörigen Schlüssel verfügt, wobei das aktivierte Zugriffskontrollprogramm (2) den Zugriff auf die zugriffsgeschützten Daten (4) in Abhängigkeit von Zugriffsregeln steuert, die in einer Konfigurationsdatei (3) des Datenträgers (1) gespeichert sind.

18. Gerät mit einem Sicherheitsmodul (6), das einen Schlüssel zur Aktivierung eines Zugriffskontrollprogramms (2) aufweist, das auf einem in das Gerät (5) einsetzbaren Datenträger (1) gespeichert ist,
wobei das aktivierte Zugriffskontrollprogramm (2) den Zugriff auf zugriffsgeschützte Daten (4) des Datenträgers (1) in Abhängigkeit von Zugriffsregeln steuert, die in einer Konfigurationsdatei (3) des Datenträgers (1) gespeichert sind.
